# EUROPEAN PATENT APPLICATION

(11) **EP 2 960 594 A1**
(43) Date of publication of application: **30.12.2015**
(21) Application number: 14173711.4
(22) Date of filing: 24.06.2014
(51) Int. Cl.: F24H 9/20, G01K 1/14

(54) **Heating system component and method for producing same**

(71) Applicant: Bleckmann GmbH & Co. KG, 5112 Lamprechtshausen (AT)
(72) Inventor: Teufl, Gernot, 5400 Hallein (AT)
(74) Representative: Eisenführ Speiser

(57) **Abstract**

The present invention relates to a heating system component comprising: a temperature monitoring and/or control unit comprising a lower surface, and a carrier unit comprising an upper surface. At least a part of said lower surface of said temperature monitoring and/or control unit is in thermal contact with at least a part of said upper surface of said carrier unit. Said lower surface of said temperature monitoring and/or control unit and said upper surface of said carrier unit are attached to each other by means of a welded seam, preferably by means of a laser-welded seam.

## Description

### FIELD OF THE INVENTION

The invention relates to a heating system component, to a heating system for heating fluid media, and to a method for producing a heating system component.

### BACKGROUND OF THE INVENTION

For many types of domestic appliances or domestic machines, it is necessary to heat up a fluid medium, such as for example water. Heating up can be caused by means of one or more heating systems. To that extent, a medium circuit can be provided, a pump arranged in the circuit causing circulation of the medium in the circuit.

Basic aspects of such heating systems are that, like all other components of the medium circuit, the system is to take up only a small amount of space and is to be inexpensive to produce. Furthermore, the heating system shall be simple to assemble. Reliable safeguarding of the heating system must be guaranteed upon the occurrence of a critical operating condition which can result in plastic components within the domestic appliance melting or catching fire. In case of some domestic appliances, it may further be necessary to prevent the medium to be heated from exceeding a predetermined temperature. For example in the case of a dishwashing machine, it may be necessary to prevent the washing water from exceeding its boiling temperature.

US patent application 2006/0236999 A1 discloses a heating system for heating fluid media, in particular for domestic appliances, including a carrier unit, a heating unit arranged on the carrier unit and a heat transfer element which is arranged on the carrier unit and comprising a material which is a good conductor of heat. On the heat transfer element, temperature safety devices are mounted by fixing elements via corresponding through apertures.

When using conventional temperature monitoring and/or control elements (such as, e.g., thermal fuses) with continuous-flow water heaters, there is a problem when the temperature monitoring and/or control elements are fixed with, e.g., one or more screws, to a mounting plate. That is, when the mounting plate is soldered to the heating unit, it may curve. Further, when fastening respective fixing screws on a temperature monitoring and/or control element, the temperature monitoring and/or control element may be lifted from the fixing plate and remain in the air above the hot location. As a consequence, the largest amount of heat in the center of the heating unit cannot be released directly to the temperature monitoring and/or control element, but has to be released via, e.g., the mounting plate, screws, and/or the base plate flange. These effects result in an unacceptable (i.e., too slow) response time of the temperature monitoring and/or control element.

An object of the present invention is therefore to provide a heating system component, a heating system, and a method for producing a heating system component, which avoid the slow response times of prior-art arrangements.

### SUMMARY OF THE INVENTION

According to a first aspect of the present invention, there is provided a heating system component comprising: a temperature monitoring and/or control unit comprising a lower surface; a carrier unit comprising an upper surface; wherein at least a part of said lower surface of said temperature monitoring and/or control unit is in thermal contact with at least a part of said upper surface of said carrier unit; wherein said lower surface of said temperature monitoring and/or control unit and said upper surface of said carrier unit are attached to each other by means of a welded seam, preferably by means of a laser-welded seam.

The present invention proposes to fix the temperature monitoring and/or control element onto the heating unit, preferably in the direct vicinity of the hottest spot thereof, by means of a welded seam. Preferably, the fixing is carried out by weld-ing, in particular by laser welding. In general, employing laser welding for attaching temperature monitoring and/or control elements in heating systems involves the advantage of higher functionality and security as compared to prior art mounting approaches using, e.g., curved spring washers. In particular, fixing the temperature monitoring and/or control element onto the heating unit by welding significantly improves (i.e., reduces) the temperature monitoring and/or control element's response time.

According to a preferred embodiment, said temperature monitoring and/or control unit comprises a lower part having a beveled edge; wherein said beveled edge is adjacent to said lower surface; wherein said beveled edge comprises a bevel angle of less than 90°; wherein said welded seam is located essentially along said beveled edge. By employing a beveled edge having a bevel angle of less than 90°, it is easier to reach the contact area between the temperature monitoring and/or control unit's lower surface and the carrier unit's upper surface with a laser beam. As a consequence, less laser power is needed, while still achieving the desired strength of attachment between the temperature monitoring and/or control unit's lower surface and the carrier unit's upper surface.

According to a further preferred embodiment, said bevel angle ranges between 5° and 55°, preferably between 15° and 45°, and even more preferably between 25° and 35°. By choosing a bevel angle as described, reaching the contact area between the temperature monitoring and/or control unit's lower surface and the carrier unit's upper surface with a laser beam is made even easier and thus improved. Further, by increasing the respective melting zone, a complete material connection can be achieved. Providing a beveled edge of a certain length in addition compensates for a potential mispositioning during automatic production. When aiming for a laser entrance angle on the material surface of 90°, a bevel angle of preferably 30° may be chosen so that the laser beam can be directed at an angle of 120° with respect to the carrier unit's upper surface. The laser beam can thus be prevented from getting too close to the sensitive parts of the temperature monitoring and/or control unit.

According to a further preferred embodiment, said temperature monitoring and/or control unit is configured to measure a temperature, to compare said temperature to a predefined temperature limit, and to output a control signal based on said comparison.

According to a further preferred embodiment, said control signal comprises information on a desired switching state of a heating unit.

According to a further preferred embodiment, said lower surface of said temperature monitoring and/or control unit comprises at least one first protrusion and/or recess. Said upper surface of said carrier unit comprises at least one second recess and/or protrusion. Said first protrusion and/or recess corresponds to said second recess and/or protrusion. By designing the temperature monitoring and/or control unit's lower surface and the carrier unit's upper surface in the described manner, the total contact area can be increased, thus providing for an improved heat transport between carrier unit and temperature monitoring and/or control unit. The design further enables an easier manufacture given the preferred matching of protrusions and recesses.

According to a further preferred embodiment, said lower surface of said temperature monitoring and/or control unit comprises AlMg₃. However, any other weldable aluminum alloys or aluminum-steel compond material can be used.

According to a further preferred embodiment, said upper surface of said carrier unit comprises AlMg₃. However, aluminum alloys Al_{99,5} and AlMg₁ are suitable as well.

According to a further preferred embodiment, said temperature monitoring and/or control unit comprises at least one temperature monitoring and/or control element having a lower surface which is smaller than said lower surface of said temperature monitoring and/or control unit. By designing the temperature monitoring and/or control element such that it comprises a lower surface which is smaller than said lower surface of said temperature monitoring and/or control unit, it is possible to have the lower surface of said temperature monitoring and/or control unit extending beyond the lower surface of said temperature monitoring and/or control element. The temperature monitoring and/or control unit's lower surface can thus be reached in an easier manner in order to attach the temperature monitoring and/or control unit to the carrier unit.

According to another aspect of the present invention, there is provided a heating system for heating fluid media, in particular for domestic appliances, comprising: a heating system component as described herein, a heating unit arranged on said carrier unit, and wherein said temperature monitoring and/or control unit is configured to measure the temperature of said heating unit.

According to a preferred embodiment, the heating system comprises a casing portion, wherein the heating unit is mounted to said casing portion, and wherein the casing portion comprises aluminum. Even more preferably, the entire heating system is composed of aluminum. Whereas conventional heating systems typically provide a recess in a carrier unit, where the heating unit is arranged within the recess, the preferred embodiment described herein advantageously makes it possible to mount (e.g., by soldering) a heating unit directly to a casing portion of the carrier unit. The carrier unit is thus structurally simplified, because a recess is no longer necessary. Further, the inner side of the casing portion is preferably coated with a nonstick coating. The nonstick coating is preferably composed of a ceramics-based material. By employing a ceramics-based nonstick coating, the aluminum surfaces may be rendered dishwasher-safe.

According to a preferred embodiment, the heating unit comprises a heat transfer element, wherein said heat transfer element is an elongate flat element. According to a further preferred embodiment, the carrier unit comprises a disc. According to a further preferred embodiment, the carrier unit has a recess which is open at one side and which is preferably at least approximately C-shaped in cross-section for receiving the heating unit. According to a further preferred embodiment, the heating unit is formed by at least one tubular heater. According to a further preferred embodiment, the cross-sectional shape of the heating unit is at least approximately adapted to the cross-sectional shape of the recess of the carrier unit.

According to another aspect of the present invention, there is provided a method for producing a heating system component as described herein. The method comprises: providing a temperature monitoring and/or control unit comprising a lower surface; providing a carrier unit comprising an upper surface; contacting at least a part of said lower surface of said temperature monitoring and/or control unit with at least a part of said upper surface of said carrier unit; welding, preferably laser-welding, said lower surface of said temperature monitoring and/or control unit and said upper surface of said carrier unit to each other.

According to a preferred embodiment, the method further comprises beveling an edge of a lower part of temperature monitoring and/or control unit to obtain a beveled edge, wherein said beveled edge comprises a bevel angle of less than 90°; wherein said welding is carried out essentially along said beveled edge. According to a further preferred embodiment, said welding comprises laserwelding by employing a laser beam, and said laser beam is directed essentially perpendicular to a surface of said temperature monitoring and/or control unit. According to a further preferred embodiment, said laser beam comprises a power of between 0,5 kW and 1,5 kW, preferably of 1 kW.

It shall be understood that the heating system component of claim 1, the heating system for heating fluid media of claim 10, and the method for producing a heating system component of claim 12 have similar and/or identical preferred embodiments as defined in the dependent claims.

It shall be understood that a preferred embodiment of the invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

In the following drawings:
**Fig. 1** shows schematically and exemplarily a perspective sectional view of part of a prior-art heating system;
**Fig. 2** shows schematically and exemplarily a cross sectional view of part of a prior-art heating system;
**Fig. 3** shows schematically and exemplarily a top view of a temperature monitoring and/or control element;
**Fig. 4** shows schematically and exemplarily a top view of a temperature monitoring and/or control elements' base plate;
**Figs. 5A** to 5C show schematically and exemplarily an embodiment of a temperature monitoring and/or control system comprising temperature monitoring and/or control elements;
**Fig. 6** shows schematically and exemplarily another embodiment of a temperature monitoring and/or control system comprising temperature monitoring and/or control elements;
**Fig. 7** shows schematically and exemplarily an embodiment of a temperature monitoring and/or control element having a bevel of approximately 30°;
**Fig. 8** shows schematically and exemplarily another view of the temperature monitoring and/or control element of **Fig. 7****;**
**Fig. 9** shows schematically and exemplarily a beveled edge of a temperature monitoring and/or control element after welding;
**Fig. 10** shows schematically and exemplarily a further embodiment of a temperature monitoring and/or control system comprising temperature monitoring and/or control elements;
**Fig. 11** shows schematically and exemplarily an exploded view of a detail from the temperature monitoring and/or control system of **Fig. 10****;**
**Fig. 12** shows schematically and exemplarily a further embodiment of a temperature monitoring and/or control system comprising temperature monitoring and/or control elements;
**Fig. 13** shows schematically and exemplarily another view of the temperature monitoring and/or control system of **Fig. 12****;** and
**Fig. 14** shows schematically and exemplarily an embodiment of a method for producing a heating system component.

### DETAILED DESCRIPTION OF EMBODIMENTS

One concern with heating systems is reliable safeguarding against overheating. Typically, protection against overheating is achieved by employing temperature monitoring and/or control elements, such as, e.g., thermostats and/or thermal links. Temperature monitoring and/or control elements tend to be used in applications where a fixed temperature needs to be monitored or controlled and a maximum temperature must not be exceeded. Example applications include, but are not limited to, household appliances such as dishwashers and washing machines, small electrical appliances such as coffeemakers, steam generators etc. or electrically monitored water heaters.

As a temperature sensing element, e.g., a vaulted bimetal disc may be used. The vaulted bimetal disc is preferably placed in direct contact with a mounting plate therefore reacting quickly to temperature. Having reached a predetermined temperature the bimetal disc operates and opens an electrical circuit. Once the temperature has fallen again under the predetermined temperature, the disc returns into its original position thereby closing the circuit again. Additionally and/or alternatively, a solder insert in the mounting plate may be in direct thermal contact with the surface that is to be monitored. When the preset temperature is reached, the solder melts causing a pin to move which results in the electrical contacts opening. For a two-component system combining temperature monitoring and temperature control, the two components temperature monitor and temperature control may have a common mounting plate, which is responsible for thermal conduction. This ensures that the thermal information for thermostat and thermal link always comes from the same source.

Temperature control elements may be used for applications where a maximum temperature must not be exceeded (such as, e.g., for example in coffee makers, irons, dishwashers, dryers) and to protect electric heating elements. A temperature control element typically has a melt solder insert in the mounting plate which is in direct thermal contact with the surface that is to be monitored. When the preset temperature is reached, the solder melts causing a pin to move which results in the electrical contacts opening.

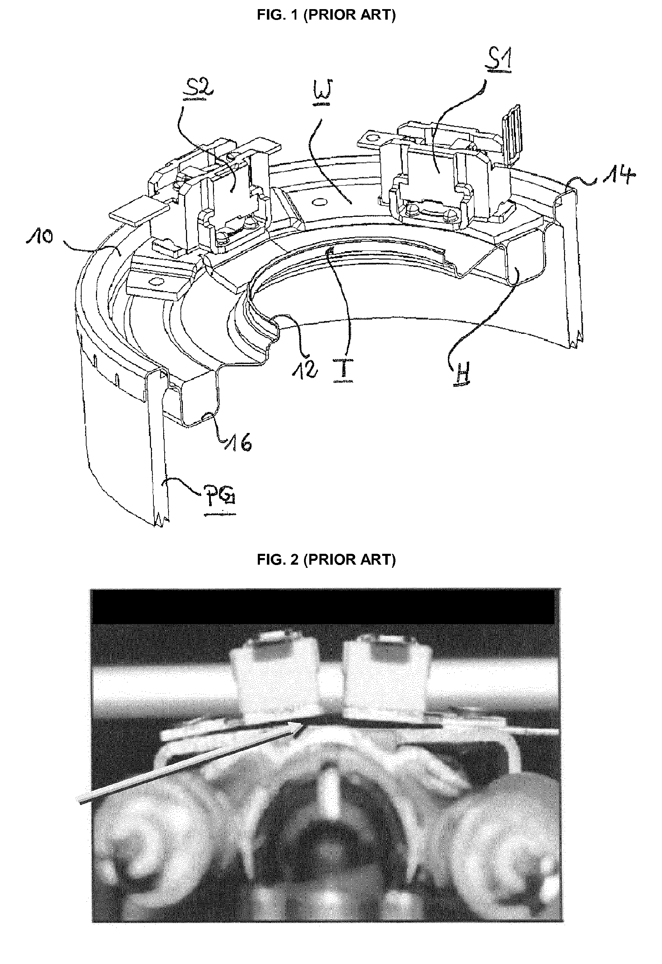

**Fig. 1** shows schematically and exemplarily a conventional heating system as disclosed in US patent application 2006/0236999 A1, which is incorporated herein by reference. The heating system of **Fig. 1** comprises a carrier unit T, a heating unit H, a heat transfer element W, and safety devices S1, S2 arranged on the heat transfer element W. The first safety device S1 interrupts the power circuit to the heating unit H, based on the temperature of the heating unit H, which is detected by the first safety device S1. First safety device S1 preferably interrupts the power circuit to the heating unit H when the temperature of the heating unit H exceeds a first predetermined temperature limit value, for example when the heating unit H runs dry. The first predetermined temperature limit value may be chosen such that melting of plastic parts in the region of the heating system is avoided. The second safety device S2 interrupts the power circuit to the heating unit H based on the temperature of the medium to be heated, which is detected by the second safety device S2. Second safety device S2 preferably interrupts the power circuit to the heating unit H when the temperature of the medium to be heated exceeds a second predetermined temperature limit value which can be defined for example by the boiling temperature of the medium to be heated. Consequently the medium is prevented from boiling. Safety devices S1, S2 may be considered temperature monitoring and/or control elements.

The heating system may be connected to, e.g., a conveyor pump of a dishwashing machine, of which only the housing PG comprising a plastic material with a low melting point is shown in part in **Fig. 1****.** The heating system can be mounted to the conveyor pump or the housing PG thereof during assembly of the domestic appliance or can form a pre-assembled structural unit together with the conveyor pump.

As can be seen from **Fig. 1****,** carrier unit T is a circular disc 10 which may be produced, e.g., from corrosion-resistant steel. In concentric relationship with its central axis (not shown) disc 10 has a circular hole 12, through which the suction pipe of the pump is passed in sealing integrity in relation to the medium. At its outer peripheral edge 14, disc 10 may engage over the edge of the pump housing PG in sealing integrity in relation to the medium. That side of disc 10, which faces in the direction of the lower edge of the sheet in **Fig. 1****,** is in direct contact with the medium to be heated in the installed condition of the pump and can therefore be referred to as the wet side whereas the side of the disc 10, which faces towards the upper edge of the sheet, does not come into contact with the medium and can thus be referred to as the dry side.

As can further be seen from **Fig. 1****,** disc 10 forming carrier unit T has a recess 16 which extends there around in concentric relationship with its central axis at approximately the radial centre of the disc 10. Recess 16 is of a square configuration in cross-section, wherein one side of the square, being the upwardly facing side, is omitted. Heating unit H which is formed by a tubular heater of known kind is fitted in the recess 16. As can be seen from **Fig. 1****,** the shape and the outside dimensions of heating unit H are matched to the shape and the outside dimensions of recess 16 in disc 10 in such a way that heating unit H is in full area contact at three sides against the inside walls (not identified in greater detail) of recess 16. Consequently, heat produced by heating unit H is transferred to the medium which is disposed on the wet side of disc 10 and which is to be heated.

When using conventional temperature monitoring and/or control elements (such as, e.g., thermal fuses) with continuous-flow water heaters, there is a problem when the temperature monitoring and/or control elements are fixed with, e.g., one or more screws, to a mounting plate, as shown in **Fig. 1** for the prior-art heating system shown therein. That is, when the mounting plate is soldered to the heating unit, it may curve. Further, when fastening respective fixing screws on a temperature monitoring and/or control element, the temperature monitoring and/or control element may be lifted from the fixing plate and remain in the air above the hot location. This effect is illustrated in **Fig. 2** and indicated by an arrow. As a consequence, the largest amount of heat in the center of the heating unit cannot be released directly to the temperature monitoring and/or control element, but has to be released via, e.g., the mounting plate, screws, and/or the base plate flange. These effects result in an unacceptable (i.e., too slow) response time of the temperature monitoring and/or control element.

One idea to address the above-identified issue is to directly fix the temperature monitoring and/or control element onto the heating unit, preferably in the direct vicinity of the hottest spot thereof. The fixing may be carried out by welding, preferably by laser welding. In general, as set out in the following, employing laser welding for attaching temperature monitoring and/or control elements in heating systems involves the advantage of higher functionality and security as compared to prior art mounting approaches using, e.g., curved spring washers. In particular, fixing the temperature monitoring and/or control element onto the heating unit by welding significantly improves (i.e., reduces) the temperature monitoring and/or control element's response time.

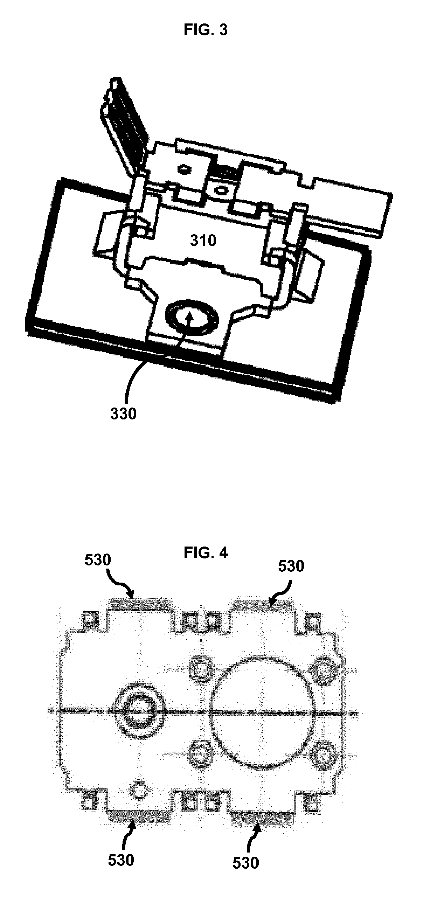

Several examples for fixing the temperature monitoring and/or control element onto the heating unit by welding are illustrated in the following. **Fig. 3** shows schematically and exemplarily one option to fix the temperature monitoring and/or control element onto the heating unit by welding. That is, **Fig. 3** shows a temperature monitoring and/or control element 310. A spot weld 330 on respective mounting portions of monitoring and/or control element 310 is illustrated as well. **Fig. 4** shows schematically and exemplarily another option to fix the temperature monitoring and/or control element onto the heating unit by welding. That is, **Fig. 4** shows a top view of a temperature monitoring and/or control elements' base plate comprising weld seams 530.

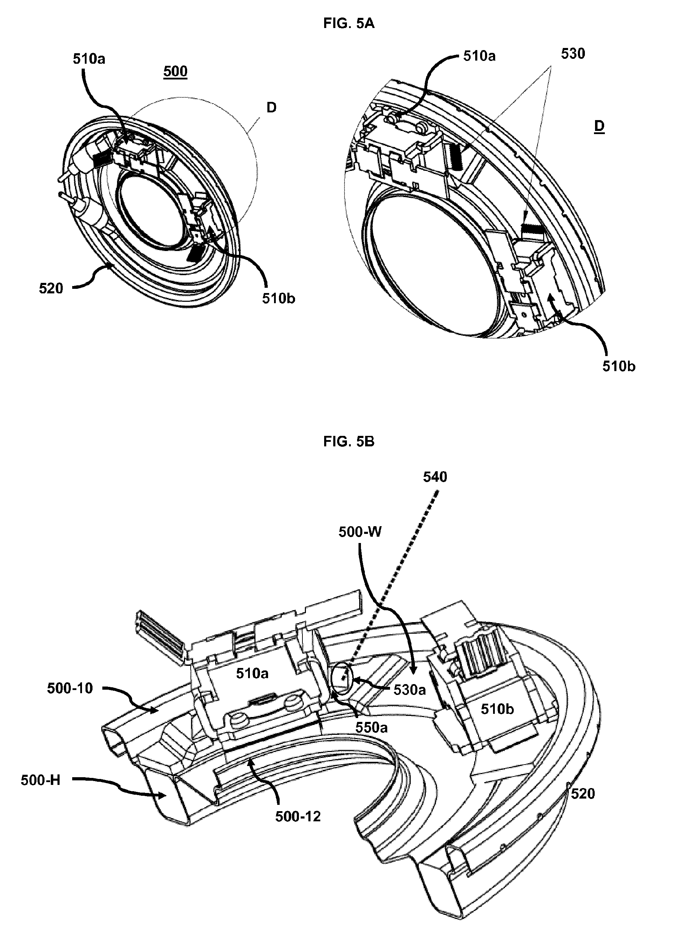

**Fig. 5A** shows schematically and exemplarily an embodiment of a temperature monitoring and/or control system 500 comprising temperature monitoring and/or control elements 510a, 510b. Temperature monitoring and/or control elements 510a, 510b are mounted on a carrier unit 520. As further shown in the detailed view of area D of the left panel of **Fig. 5A****,** Temperature monitoring and/or control elements 510a, 510b are mounted to carrier unit 520 via weld seams 530.

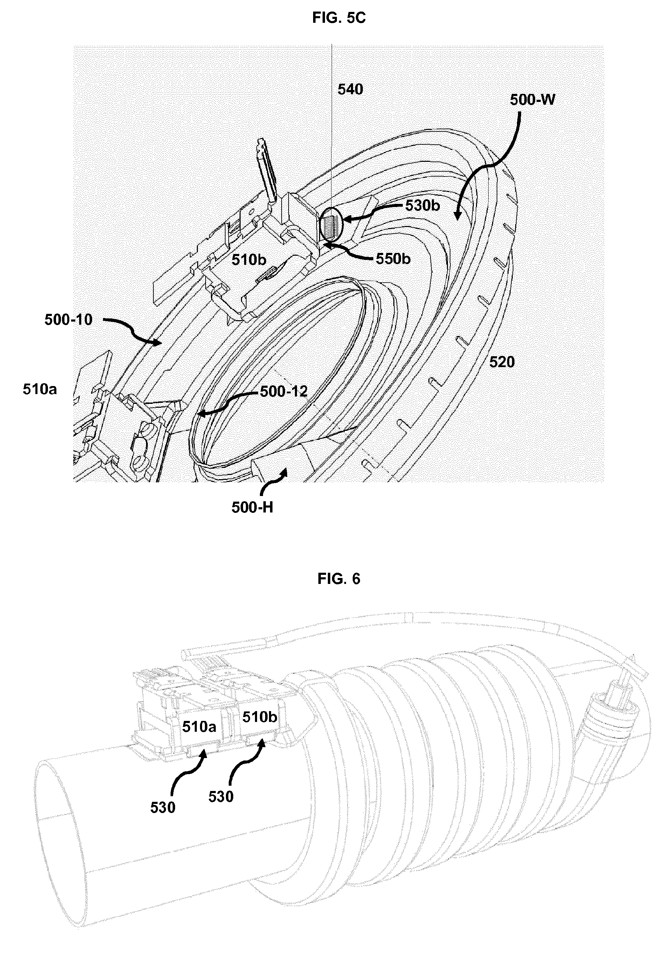

**Figs. 5B** **and** **5C** show schematically and exemplarily further views of temperature monitoring and/or control system 500. The heating system of **Figs. 5A to 5C** comprises a carrier unit 520, a heating unit 500-H, a heat transfer element 500-W, and temperature monitoring and/or control units 510a, 510b, which may preferably be safety devices. Temperature monitoring and/or control units 510a, 510b are arranged on heat transfer element 500-W. A first temperature monitoring and/or control unit 510a interrupts the power circuit to the heating unit 500-H, based on the temperature of the heating unit 500-H, which is detected by the first temperature monitoring and/or control unit 510a. First temperature monitoring and/or control unit 510a preferably interrupts the power circuit to heating unit 500-H when the temperature of heating unit 500-H exceeds a first predetermined temperature limit value, for example when heating unit 500-H runs dry. The first predetermined temperature limit value may be chosen such that melting of plastic parts in the region of the heating system is avoided. A second temperature monitoring and/or control unit 510b interrupts the power circuit to heating unit 500-H based on the temperature of the medium to be heated, which is detected by second temperature monitoring and/or control unit 510b. Second temperature monitoring and/or control unit 510b preferably interrupts the power circuit to heating unit 500-H when the temperature of the medium to be heated exceeds a second predetermined temperature limit value which can be defined for example by the boiling temperature of the medium to be heated. Consequently the medium is prevented from boiling.

The heating system may be connected to, e.g., a conveyor pump of a dishwashing machine in a similar manner as the heating system shown in **Fig. 1****.** The heating system can be mounted to the conveyor pump or to a housing thereof during assembly of the domestic appliance or can form a pre-assembled structural unit together with the conveyor pump.

As can be seen from **Figs. 5A to 5C****,** carrier unit 520 is a circular disc 500-10 which may be produced, e.g., from corrosion-resistant steel. However, in other embodiments of carrier unit 520, circular disc 500-10 may be produced, e.g., from AlMg₃, AlMg₁, or Al_{99,5}. In concentric relationship with its central axis (not shown) disc 500-10 has a circular hole 500-12, through which the suction pipe of the pump is passed in sealing integrity in relation to the medium. At its outer peripheral edge, disc 500-10 may engage over the edge of a pump housing in sealing integrity in relation to the medium. That side of disc 500-10, which faces in the direction of the lower edge of the sheet in **Figs. 5A to 5C****,** is in direct contact with the medium to be heated in the installed condition of the pump and can therefore be referred to as the wet side whereas the side of the disc 500-10, which faces towards the upper edge of the sheet, does not come into contact with the medium and can thus be referred to as the dry side.

Disc 500-10 forming carrier unit 520 preferably has a recess which extends there around in concentric relationship with its central axis at approximately the radial centre of disc 500-10. Said recess is preferably of a square configuration in cross-section, wherein one side of the square, being the upwardly facing side, is omitted. Heating unit 500-H which is preferably formed by a tubular heater of known kind is fitted in the recess. The shape and the outside dimensions of heating unit 500-H are preferably matched to the shape and the outside dimensions of the recess in disc 500-10 in such a way that heating unit 500-H is in full area contact at three sides against the inside walls of said recess. Consequently, heat produced by heating unit 500-H is transferred to the medium which is disposed on the wet side of disc 500-10 and which is to be heated.

As can further be seen from **Figs. 5B** **and** **5C****,** a laser beam 540 may be employed to attach temperature monitoring and/or control units 510a, 510b to carrier unit 520. In particular, respective lower parts of temperature monitoring and/or control units 510a, 510b may comprise beveled edges 550a, 550b. By employing a beveled edge 550a or 550b, laser beam 540 can be directed such that it is prevented from getting too close to sensitive parts of temperature monitoring and/or control units 510a, 510b. A welded seam 530a, 530b is established along beveled edges 550a, 550b. Further details are explained herein below.

**Fig. 6** shows schematically and exemplarily another embodiment of a temperature monitoring and/or control system comprising temperature monitoring and/or control elements 510a, 510b mounted on a tube filed with a fluid to be heated, such as, e.g., a water pipe. Temperature monitoring and/or control elements 510a, 510b are fixed to the tube by means of laser weld seams 530.

In order to illustrate the effect of welding the temperature monitoring and/or control elements to the carrier unit, several test measurements have been carried out. In a first test experiment, a temperature monitoring and/or control element was fixed to a continuous-flow water heater by (a) pressing and (b) laser-welding. The test yielded a response time of the laser-welded temperature monitoring and/or control element which was two to four seconds shorter than the corresponding response time of the pressed temperature monitoring and/or control element. In addition, for case (b) overshoot was reduced by approximately 20°C.

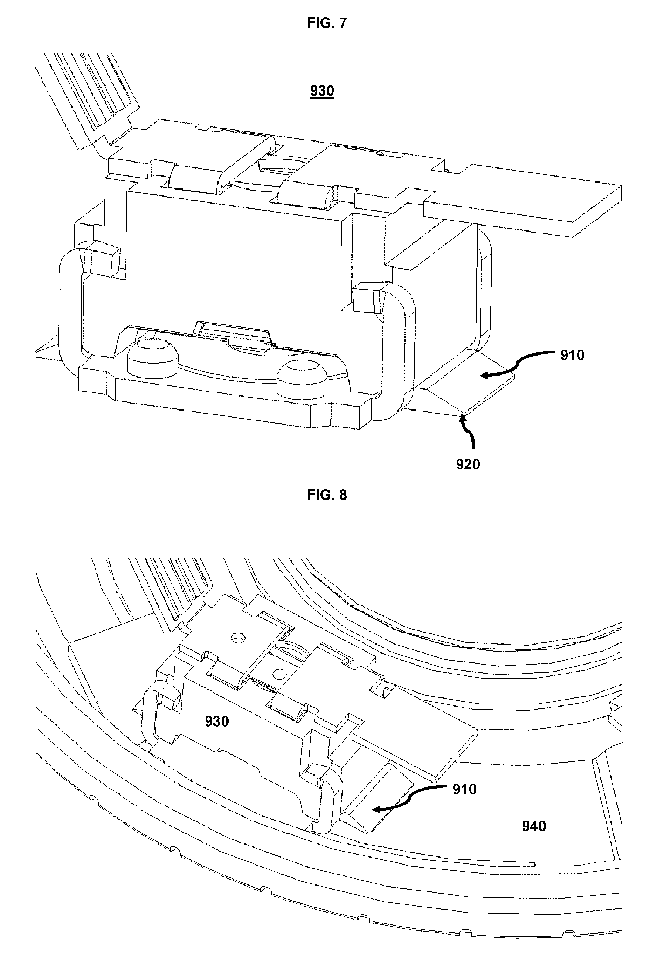

In a further test experiment, there occurred a problem that, when fixing the temperature monitoring and/or control element to the base plate of a continuous-flow water heater, a high laser power of up to 2 kW (or even more) was necessary due to a disadvantageous laser entry angle. This yields an unsatisfactory welding result. One solution to improve the laser entrance into the base plate material (which may be preferably AlMg₃) is illustrated in **Figs. 7 and 8** and relates to employing a bevel 910 (i.e., a beveled edge connecting the two adjacent surfaces) of preferably 25° to 35° at wing ends 920 of temperature monitoring and/or control element 930. Bevel 910 is preferably punched or stamped into wing ends 920. Punching or stamping is preferably carried out by means of a punch cutter or stamping tool, respectively.

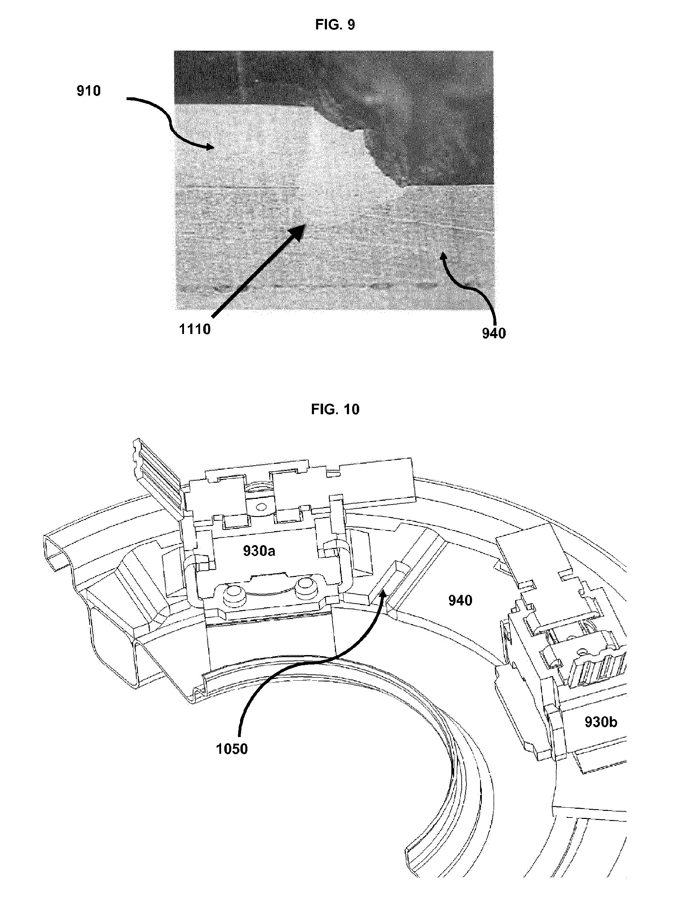

Employing bevel 910 makes it easier for laser beam 540 to enter the material at a preferred angle of 90°. As a consequence of laser beam 540 entering at a more preferred angle, the welds turn solid and the melt enters the carrier plate 940 and wing ends 920 preferably in a cone-shaped manner. The conical entering of melt 1110 in the direction of the laser beam is shown in **Fig. 9****.** In the test experiment described, a laser power of 1 kW was sufficient when using a 45°-bevel. As explained herein above, a bevel of 25° to 35° degrees is even more preferred. By applying a bevel to the wing ends of the temperature monitoring and/or control element, the laser power necessary to satisfactorily mount the temperature monitoring and/or control element can thus be reduced.

An optimal thermal coupling of temperature monitoring and/or control element to the heating system results in an improved heat transfer and shorter response time. Consequently, strong heating powers can be controlled in a secure manner and positive effects on scaling of the tubes are observed. By welding the temperature monitoring and/or control element to the heating system, less mounting elements are needed, because, e.g., fixing elements, such as, e.g., screws, may be omitted. Accordingly, the mounting is eased in general. Automating the coupling process is possible as well. In accordance with the improved thermal coupling, a higher temperature threshold of the temperature monitoring and/or control element may be chosen. Consequently, the temperature monitoring and/or control system is rendered more robust overall in view of a potential formation of scale of the heating surface.

**Fig. 10** shows schematically and exemplarily a further embodiment of a temperature monitoring and/or control system comprising temperature monitoring and/or control elements. In the embodiment of **Fig. 10****,** cutout portion 1050 is provided in carrier plate 940. By means of cutout portion 1050, it is possible to define the quantity of heat transferred from a heat transfer element on carrier plate 940 to temperature monitoring and/or control element 930a. That is, by making cutout portion 1050 larger, the cross section area available for conducting heat is made smaller so that less heat is transferred to temperature monitoring and/or control element 930a. Alternatively, by making cutout portion 1050 smaller, the cross section area available for conducting heat is made larger so that more heat is transferred to temperature monitoring and/or control element 930a. Defining the heat quantity to be conducted to temperature monitoring and/or control element 930a may become necessary in order to account for the improved thermal coupling due to laser welding. That is, when pressing a conventional temperature monitoring and/or control element on a carrier plate, less heat is transferred to the conventional temperature monitoring and/or control element. The temperature monitoring and/or control element's temperature thresholds are accordingly adjusted to trigger when a certain amount of heat has been received. With the improved thermal coupling according to the present invention, that certain amount of heat is conducted to the temperature monitoring and/or control element much faster. In order to avoid having to adjust the respective temperature thresholds, one may thus consider including cutout portion 1050 as described herein.

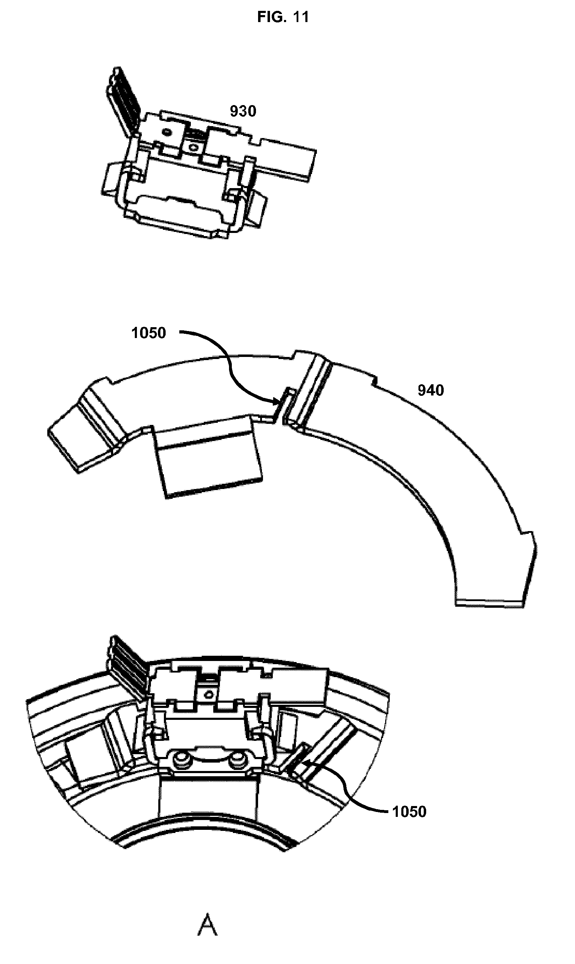

**Fig. 11** shows schematically and exemplarily an exploded view of a detail from the temperature monitoring and/or control system of **Fig. 10****.** Temperature monitoring and/or control element 930 is shown on the top. Carrier plate 940 comprising cutout portion 1050 is shown in the center. The mounted combination of temperature monitoring and/or control element 930 and carrier plate 940 is shown in the bottom, where cutout portion 1050 is visible as well.

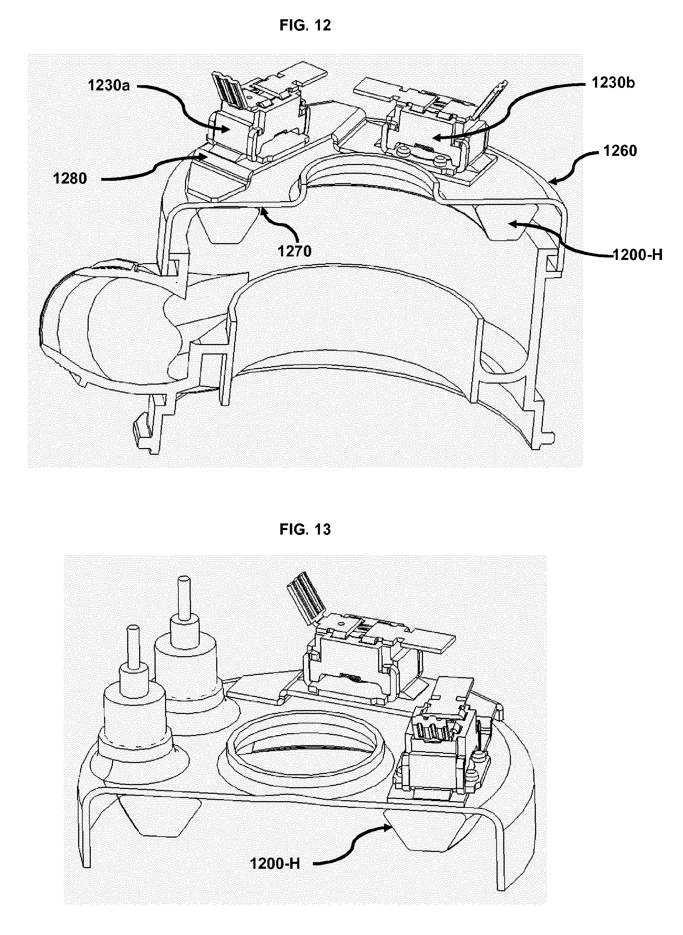

**Fig. 12** shows schematically and exemplarily a further embodiment of a temperature monitoring and/or control system comprising temperature monitoring and/or control elements. The temperature monitoring and/or control system differs from the temperature monitoring and/or control systems discussed above in that its construction is optimized for an all-aluminum option.

In particular, there are shown temperature monitoring and/or control elements 1230a, 1230b. Preferably, temperature monitoring and/or control elements 1230a, 1230b are laser-welded onto thermal bridge 1280. Thermal bridge 1280 is preferably composed of AlMg₃. However, aluminum alloys Al_{99,5} and AlMg₁ are suitable as well. As shown in **Fig. 12****,** thermal bridge 1280 is preferably mounted on casing portion 1260. Casing portion 1260 is preferably composed of AlMg₃. However, aluminum alloys Al_{99,5} and AlMg₁ are suitable as well. Thermal bridge 1280 is preferably mounted on casing portion 1260 by soldering or laser-welding. In **Fig. 12****,** casing portion 1260 is shaped like a circular disc. However, other shapes of casing portion 1260 are conceivable to the skilled person as well. Inner side 1270 of casing portion 1260 is preferably coated with a nonstick coating. The nonstick coating is preferably composed of a ceramics-based material. Additionally and/or alternatively, the nonstick coating is preferably produced by means of a sol-gel process. By employing a ceramics-based nonstick coating, the aluminum surfaces may be rendered dishwasher-safe. As can further be seen from **Fig. 12****,** heating unit 1200-H is directly attached to casing portion 1260. In the embodiment shown, heating unit 1200-H exhibits a trapezoid cross-section. However, other cross section shapes of heating unit 1200-H are conceivable to the skilled person. Heating unit 1200-H is in full area contact with at least one of the inside walls of casing portion 1260. Consequently, heat produced by heating unit 1200-H is transferred to the medium which is disposed on the wet side of casing portion 1260 and which is to be heated.

**Fig. 13** shows schematically and exemplarily another view of the temperature monitoring and/or control system of **Fig. 12****.** In the embodiment shown herein, an essential part of an upper surface of heating unit 1200-H is soldered to casing portion 1260.

A list of possible manufacturing methods comprises, but is not limited to, half-automatic assembly and fully-automatic assembly. The beveled edge geometry described herein is preferably optimized for an automatic positioning of the temperature monitoring and/or control elements according to the present invention. That is, by choosing a bevel angle of preferably 25° to 35°, the bevel surface visible from the direction of laser beam 540 can be kept sufficiently large so that a possible misalignment of the temperature monitoring and/or control system components can be compensated for.

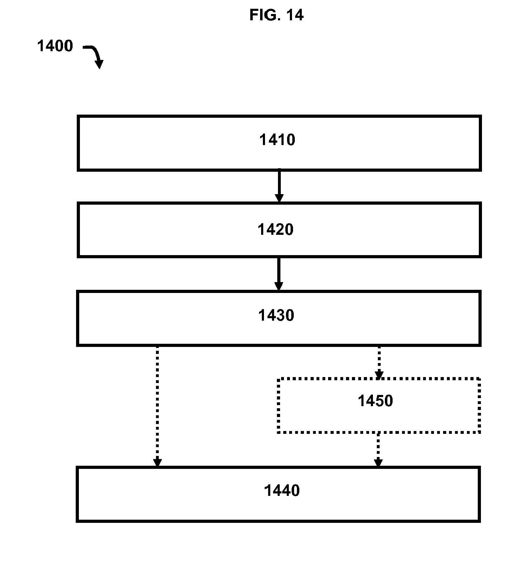

**Fig. 14** shows schematically and exemplarily an embodiment of a method for producing a heating system component. In a first step 1410, the method comprises providing a temperature monitoring and/or control unit comprising a lower surface. In a second step 1420, the method comprises providing a carrier unit comprising an upper surface. In a third step 1430, the method comprises contacting at least a part of said lower surface of said temperature monitoring and/or control unit with at least a part of said upper surface of said carrier unit. In a further optional step 1450, the method comprises beveling an edge of a lower part of said temperature monitoring and/or control unit to obtain a beveled edge, wherein said beveled edge comprises a bevel angle of less than 90°. In a final step 1440, the method comprises welding, preferably laser-welding, said lower surface of said temperature monitoring and/or control unit and said upper surface of said carrier unit to each other. Preferably, said welding is carried out essentially along said beveled edge obtained in step 1450.

An example application of the invention generally relates to situations where a fixed temperature needs to be monitored or controlled and a maximum temperature must not be exceeded, for example in household appliances such as dishwashers, dryers, and washing machines, small electrical appliances such as coffeemakers, irons, steam generators etc. or in electrically monitored water heaters. The invention may be used protect electric heating elements.

The temperature monitoring and/or control unit may comprise one or more temperature monitoring and/or control elements, such as, e.g., safety devices.

Other variations to the disclosed embodiments can be understood and effected by those skilled in the art in practicing the claimed invention, from a study of the drawings, the disclosure, and the appended claims.

In the claims, the word "*comprising"* does not exclude other elements or steps, and the indefinite article "*a*" or "*an*" does not exclude a plurality.

A single unit or device may fulfill the functions of several items recited in the claims. The mere fact that certain measures are recited in mutually different dependent claims does not indicate that a combination of these measures cannot be used to advantage.

Determinations like measuring a temperature performed by one or several units or devices can be performed by any other number of units or devices. For example, measuring a temperature can be performed by a single temperature monitoring and/or control unit or by any other number of different units. The determinations and/or the control of the heating system for heating fluid media can be implemented as program code means of a computer program and/or as dedicated hardware.

A computer program may be stored/distributed on a suitable medium, such as an optical storage medium or a solid-state medium, supplied together with or as part of other hardware, but may also be distributed in other forms, such as via the Internet or other wired or wireless telecommunication systems. The term "computer program" may also refer to embedded software.

Any reference signs in the claims should not be construed as limiting the scope.

The present invention relates to a heating system component comprising: a temperature monitoring and/or control unit comprising a lower surface, and a carrier unit comprising an upper surface. At least a part of said lower surface of said temperature monitoring and/or control unit is in thermal contact with at least a part of said upper surface of said carrier unit. Said lower surface of said temperature monitoring and/or control unit and said upper surface of said carrier unit are attached to each other by means of a welded seam, preferably by means of a laser-welded seam.

## Claims

1. A heating system component comprising:
a temperature monitoring and/or control unit (310a, 310b, 510a, 510b, 930) comprising a lower surface;
a carrier unit (520, 940) comprising an upper surface;
wherein at least a part of said lower surface of said temperature monitoring and/or control unit (310a, 310b, 510a, 510b, 930) is in thermal contact with at least a part of said upper surface of said carrier unit (520, 940);
wherein said lower surface of said temperature monitoring and/or control unit (310a, 310b, 510a, 510b, 930) and said upper surface of said carrier unit (520, 940) are attached to each other by means of a welded seam (530a, 530b), preferably by means of a laser-welded seam (530a, 530b).

2. The heating system component according to claim 1,
wherein said temperature monitoring and/or control unit (310a, 310b, 510a, 510b, 930) comprises a lower part (920) having a beveled edge (550a, 550b, 910); wherein said beveled edge (550a, 550b, 910) is adjacent to said lower surface; wherein said beveled edge (550a, 550b, 910) comprises a bevel angle of less than 90°;
wherein said welded seam (530a, 530b) is located essentially along said beveled edge (550a, 550b, 910).

3. The heating system component according to claim 2,
wherein said bevel angle ranges between 5° and 55°, preferably between 15° and 45°, and even more preferably between 25° and 35°.

4. The heating system component according to any one of claims 1 to 3,
wherein said temperature monitoring and/or control unit (310a, 310b, 510a, 510b, 930) is configured to measure a temperature, to compare said temperature to a predefined temperature limit, and to output a control signal based on said comparison.

5. The heating system component according to claim 4,
wherein said control signal comprises information on a desired switching state of a heating unit (500-H).

6. The heating system component according to any one of claims 1 to 5,
wherein said lower surface of said temperature monitoring and/or control unit (310a, 310b, 510a, 510b, 930) comprises at least one first protrusion and/or recess;
wherein said upper surface of said carrier unit (520, 940) comprises at least one second recess and/or protrusion;
wherein said first protrusion and/or recess corresponds to said second recess and/or protrusion.

7. The heating system component according to any one of claims 1 to 6,
wherein said lower surface of said temperature monitoring and/or control unit (310a, 310b, 510a, 510b, 930) comprises a weldable aluminum alloy or an aluminum-steel compond material, preferably AlMg₃.

8. The heating system component according to any one of claims 1 to 7,
wherein said upper surface of said carrier unit (520, 940) comprises at least one of aluminum alloys Al_{99,5}, AlMg₁, or AlMg₃.

9. The heating system component according to any one of claims 1 to 8,
wherein said temperature monitoring and/or control unit (310a, 310b, 510a, 510b, 930) comprises at least one temperature monitoring and/or control element having a lower surface which is smaller than said lower surface of said temperature monitoring and/or control unit (310a, 310b, 510a, 510b, 930).

10. A heating system for heating fluid media, in particular for domestic appliances, comprising:
a heating system component according to any one of claims 1 to 9,
a heating unit (500-H, 1200-H) arranged on said carrier unit (520, 940), and
wherein said temperature monitoring and/or control unit (310a, 310b, 510a, 510b, 930, 1230a, 1230b) is configured to measure a temperature of said heating unit (500-H, 1200-H).

11. The heating system according to claim 10, wherein said heating system comprises a casing portion (1260), wherein said heating unit (1200-H) is mounted to said casing portion (1260), and wherein said casing portion (1260) comprises aluminum.

12. A method (1200) for producing a heating system component according to any one of claims 1 to 9, comprising:
providing (1210) a temperature monitoring and/or control unit (310a, 310b, 510a, 510b, 930) comprising a lower surface;
providing (1220) a carrier unit (520, 940) comprising an upper surface;
contacting (1230) at least a part of said lower surface of said temperature monitoring and/or control unit (310a, 310b, 510a, 510b, 930) with at least a part of said upper surface of said carrier unit (520, 940);
welding (1240), preferably laser-welding, said lower surface of said temperature monitoring and/or control unit (310a, 310b, 510a, 510b, 930) and said upper surface of said carrier unit (520, 940) to each other.

13. The method (1200) according to claim 12,
further comprising beveling (1250) an edge of a lower part (550a, 550b) of temperature monitoring and/or control unit (310a, 310b, 510a, 510b, 930) to obtain a beveled edge (550a, 550b, 910), wherein said beveled edge (550a, 550b, 910) comprises a bevel angle of less than 90°;
wherein said welding (1240) is carried out essentially along said beveled edge (550a, 550b, 910).

14. The method (1200) according to any one of claims 12 and 13,
wherein said welding (1240) comprises laser-welding by employing a laser beam (540), wherein said laser beam (540) is directed essentially perpendicular to a surface of said temperature monitoring and/or control unit (310a, 310b, 510a, 510b, 930).

15. The method (1200) according to claim 14,
wherein said laser beam (540) comprises a power of between 0,5 kW and 1,5 kW, preferably of 1 kW.
